# FASCICULE DE BREVET EUROPEEN

(11) **EP 1 756 929 B1**
(45) Date de publication et mention de la délivrance du brevet: **14.10.2009**
(21) Numéro de dépôt: 05747171.6
(22) Date de dépôt: 21.04.2005
(51) Int. Cl.: H02K 5/20, H02K 3/32, H02K 3/50, H02K 5/22

(54) **MACHINE ELECTRIQUE A REFROIDISSEMENT PAR LIQUIDE**
FLÜSSIGKEITSGEKÜHLTE ELEKTRISCHE MASCHINE
LIQUID-COOLED ELECTRICAL MACHINE

(30) Priorité: 21.04.2004 FR 0404248
(43) Date de publication de la demande: 28.02.2007
(73) Titulaire: MICHELIN Recherche et Technique S.A., 1763 Granges-Paccot (CH)
(72) Inventeur: GASHI, Rexhep, CH-1752 VILLARS SUR GLANE (CH); WALSER, Daniel, CH-1700 FRIBOURG (CH)
(74) Mandataire: Bauvir, Jacques
(86) Numéro de dépôt international: PCT/EP2005/051773
(87) Numéro de publication internationale: WO 2005/104333

(56) Documents cités:
- SU-A- 1 436 195
- US-A- 2 831 662
- US-A- 5 523 635
- US-A- 5 585 681
- US-A1- 2003 001 440
- US-B1- 6 300 693

## Description

### DOMAINE DE L'INVENTION

La présente invention concerne les machines électriques tournantes. En particulier, la présente invention concerne des machines électriques de très forte puissance massique, notamment pour des applications automobiles.

### ETAT DE LA TECHNIQUE

Dans ce domaine technique, on a déjà cherché à construire des moteurs électriques spécifiquement adaptés pour être incorporer dans des véhicules automobiles, notamment pour en assurer la propulsion. Pour de telles applications, il est très intéressant de pouvoir monter les moteurs directement à l'intérieur des roues des véhicules. A titre d'illustration, on consultera le brevet US 6,113,119 qui décrit une liaison au sol pour véhicule automobile intégrant de nombreux éléments et notamment un moteur électrique de traction.

Il convient donc que la puissance de ces machines électriques soit au niveau requis, typiquement quelques dizaines de KWatts, et il est très important que ces machines électriques soient suffisamment compactes pour pouvoir les monter directement à l'intérieur des roues des véhicules.

Etant donné que le rendement des machines électriques ne peut être de 100%, il convient d'assurer une bonne dissipation des calories dégagées lors du fonctionnement de ce moteur, et ceci est d'autant plus critique que la puissance massique de ces machines s'élève. Malgré tout le soin apporté au choix des matériaux et à la construction des machines électriques, on sait qu'il est inévitable que lorsque l'on fait traverser un courant électrique important au travers du stator de ces machines, il faut évacuer les calories dues aux pertes (par effet Joules, etc.).

Afin d'assurer une évacuation aussi efficace que possible de ces calories, il est bien connu que le refroidissement au moyen d'un liquide caloporteur est bien plus efficace que le refroidissement par air. La demande de brevet US 2003/0001440, le brevet US 6,087,744 ainsi que le certificat d'inventeur SU 1436195 montrent des machines électriques comportant une canalisation pour la circulation d'un liquide de refroidissement, la canalisation étant aménagée dans un fourreau extérieur de la machine électrique.

Le choix d'un refroidissement par un liquide caloporteur ne va pas sans quelques inconvénients. Si la machine électrique peut être assez compacte par elle-même, son installation nécessite un certain dégagement tout autour d'elle-même afin de pouvoir brancher les canalisations amenant et évacuant le liquide caloporteur. Cela ajoute encore à la gêne créée par les connexions électriques elles bien inévitables et cela augmente d'autant l'espace nécessaire à l'installation de la machine.

### BREVE DESCRIPTION DE L'INVENTION

L'objectif de l'invention est de proposer une disposition constructive pour une machine électrique qui soit aussi compacte que possible en considérant toutes les liaisons de fluides nécessaires à son fonctionnement et qui se prête à une intégration dans une roue de véhicule, notamment une roue directrice.

L'invention propose une machine électrique tournante montée dans une roue de véhicule, ladite machine électrique comprenant un rotor intérieur rotatif autour d'un axe de rotation, comportant un stator entourant le rotor, le stator comprenant un circuit magnétique feuilleté présentant une surface enveloppe extérieure, la surface enveloppe extérieure étant en contact intime avec un fourreau extérieur , le fourreau extérieur contenant une canalisation destinée à la circulation d'un liquide de refroidissement, la canalisation formant un parcours autour de la surface enveloppe extérieure du circuit magnétique, la canalisation formant deux tronçons géométriquement parallèles, fonctionnellement en série, comportant un connecteur électrique ainsi que les raccords hydraulique auxquels débouche ladite canalisation, **caractérisée en ce que** le connecteur électrique et les raccords hydrauliques sont regroupés d'un même côté de la machine électrique, dans un secteur de connexion, un faisceau électrique est raccordé au connecteur électrique, deux tuyaux hydraulique sont raccordés aux raccords hydrauliques, le faisceau électrique et les tuyaux hydrauliques sont raccordés au secteur de connexion et rassemblés dans une gaine de protection.

Il est bien connu que les machines électriques de forte puissance sont en général axisymétriques. Dans la suite, on ne décrira qu'une machine de réalisation axisymétrique, c'est-à-dire présentant une forme extérieure globalement cylindrique. Bien entendu, on aura compris que cette disposition constructive n'est pas limitative pour l'invention. Elle est cependant extrêmement courante pour des machines de puissance importante qui sont un terrain privilégié d'application de la présente invention. Une machine électrique selon l'invention est donc en particulier telle que le fourreau extérieur forme une surface extérieure globalement cylindrique. Lesdits deux tronçons peuvent être superposés radialement ou ils peuvent être, de préférence, imbriqués l'un dans l'autre ; ils forment des hélices imbriquées comme illustré dans la suite.

De préférence, l'un des tronçons, formant un premier tronçon de la canalisation, va, axialement, d'un premier côté au second côté de la machine, l'autre des tronçons formant un second tronçon de la canalisation allant, axialement, du second côté au premier côté de la machine, le premier tronçon de la canalisation débouchant dans le second tronçon de la canalisation au second côté de la machine.

Ainsi, grâce à la disposition constructive particulière proposée par la présente invention, il est possible de concentrer en un seul endroit de la machine électrique toutes les connexions nécessaires pour le fonctionnement de celle-ci. On peut rassembler dans l'espace aussi bien les connexions hydrauliques que les connexions électriques nécessaires. Cela est très avantageux pour pouvoir intégrer une telle machine électrique à l'intérieur d'une roue de véhicule automobile.

C'est notamment tout particulièrement intéressant dans le cas où la machine électrique constituerait une masse non suspendue. En effet, dans ce cas, elle va subir différents mouvements par rapport à la caisse du véhicule en même temps que la roue. Il est alors nécessaire que toutes les connexions entre la caisse du véhicule et la machine électrique puissent supporter sans problème les nombreux mouvements qui vont survenir pendant l'utilisation du véhicule. Ainsi, l'implantation d'une telle machine électrique est grandement facilitée s'il est possible de concevoir un seul faisceau regroupant les canalisations hydrauliques et les câbles électriques qu'il faut installer entre la machine électrique et la caisse du véhicule. On peut bien entendu concevoir un connecteur unique sur la machine, regroupant les connexions hydrauliques et l'ensemble des signaux électriques.

### BREVE RESCRIPTION DES FIGURES

L'invention sera bien comprise au moyen de la description suivante à consulter en même temps que les figures jointes auxquelles :
- la figure 1 montre un fourreau faisant partie d'une machine électrique selon l'invention ;
- la figure 2 est un écorché montrant une machine électrique selon l'invention ;
- la figure 3 est une perspective montrant une vue extérieure d'une machine électrique selon l'invention ;
- la figure 4 montre une machine électrique selon l'invention, avec les divers raccordements aux fluides.

### DESCRIPTION DU MEILLEUR MODE DE REALISATION DE L'INVENTION

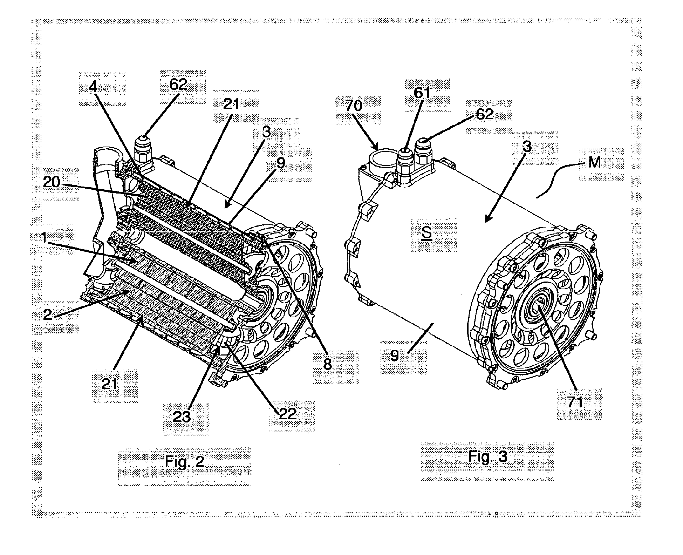

En se reportant tout d'abord à la figure 2, on voit un rotor 1 monté rotatif à l'intérieur d'un stator 2. L'entrefer est à peine visible car il est aussi faible que possible. Sur la droite de la partie supérieure de la figure 2, on reconnaît l'un des deux flasques entre lesquels les pièces constitutives du rotor 1 sont enserrées au moyen de tirants, les demi-plans de coupe de la figure 2 passant chacun par l'un de ces tirants. Le lecteur pourra se reporter au brevet US 6,426,576 pour d'autres détails relatifs au rotor.

Le stator 2 comporte un circuit magnétique 20 constitué par un empilage de tôles magnétiques. Celles-ci sont le plus souvent disposées sensiblement parallèlement à un plan perpendiculaire à l'axe de rotation du rotor de la machine. L'empilage de tôles forme des dents 22 délimitant entre elles des encoches 23, en général orientées longitudinalement. Afin de ne pas surcharger le dessin, les fils électriques conducteurs installés à l'intérieur des encoches 23 ne sont pas représentés. De même, les chignons existant de part et d'autre du stator, axialement, n'apparaissent pas sur cette figure.

Cependant, si l'homme du métier souhaite avoir quelques explications complémentaires concernant ces aspects, il lui suffit de consulter par exemple la demande de brevet US 2003/0001440 qui traite en détail de la façon dont il faut installer les fils électriques conducteurs et les immobiliser dans les encoches au moyen d'une composition d'imprégnation d'encoche contenant une résine thermodurcissable et une charge et d'une façon telle que la conduction thermique soit excellente. Rappelons encore que, selon un mode de réalisation avantageux, les chignons aux deux extrémités axiales du circuit magnétique sont aussi imprégnés par une composition d'imprégnation de chignon contenant une résine thermodurcissable et une charge.

Dans la mesure où il est particulièrement intéressant de combiner l'enseignement de la présente demande de brevet avec l'enseignement de la demande de brevet US 2003/0001440 précitée, celle-ci est incorporée dans la présente description en totalité par la référence qui y est faite.

Abordons maintenant la description d'un mode préféré de réalisation du refroidissement par circulation d'un liquide de refroidissement. On voit à la figure 2 un fourreau extérieur 3, le fourreau extérieur contenant une canalisation 4. La canalisation forme deux tronçons géométriquement parallèles, imbriqués l'un dans l'autre, fonctionnellement en série. Le premier tronçon 41 de la canalisation comporte un départ 51 débouchant d'un côté de la machine à un orifice d'entrée pour un liquide de refroidissement au premier côté de la machine. Pour la commodité de la description, on a baptisé conventionnellement l'un des côtés de la machine électrique « côté A » et l'autre côté « côté B ». Le second tronçon 42 de la canalisation comporte une arrivée 52 débouchant au même côté, ici le côté A de la machine, à un orifice de sortie. Avantageusement, l'orifice d'entrée et l'orifice de sortie débouchent chacun à un raccord hydraulique 61, 62, par exemple un raccord contenant un système de clapet auto-obturant, lesdits raccords étant adjacents l'un de l'autre. On pourrait bien entendu utiliser un seul dispositif regroupant les 2 raccords.

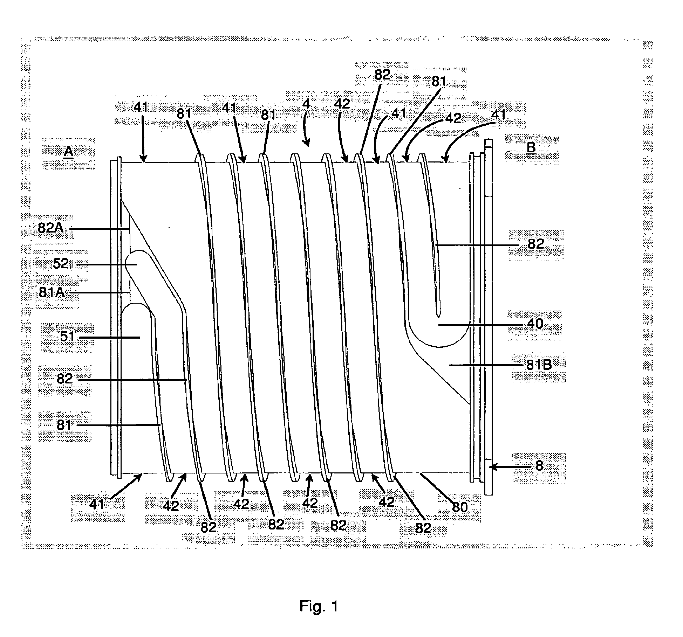

Voyons maintenant une réalisation possible pour le fourreau 3. Ce fourreau 3 comporte en son sein une canalisation 4 à l'intérieur de laquelle peut circuler un fluide caloporteur. Le fourreau 3 est par exemple formé par l'assemblage d'un manchon intérieur 8 et d'un manchon extérieur 9. On se reportera d'abord à la figure 1. On voit que le premier manchon 8 présente une base cylindrique 80, surmontée de deux nervures 81, 82 de hauteur constante. Les nervures 81 et 82 forment chacune une hélice. En se reportant ensuite à la figure 2, on voit que le second manchon 9 cylindrique entoure le premier manchon et les nervures. Il est ajusté sur lesdites nervures. Remarquons qu'il est nécessaire d'assurer une étanchéité globale du circuit hydraulique, c'est à dire entre les deux manchons, intérieur 8 et extérieur 9, afin que le fourreau 3 ne présente aucune fuite. Par contre, l'étanchéité n'est pas indispensable au niveau du haut des nervures 81 et 82. Un ajustement fin entre nervures et manchon extérieur 9 suffit à créer des pertes de charge importantes qui vont de toute façon empêcher le liquide de refroidissement de passer par dessus la nervure du tronçon 41 au tronçon 42.

Le circuit magnétique de la machine électrique présente une surface enveloppe extérieure 21 cylindrique. Au montage de la machine électrique, le manchon intérieur 8 est ajusté de façon intime au circuit magnétique 20. De la sorte, les calories passent par conduction entre le circuit magnétique 20 et le fourreau 3 de façon très efficace. On peut remarquer que, dans la réalisation illustrée ici, les premier et second tronçons de la canalisation sont en tout point de leur parcours à égale distance de la surface enveloppe extérieure du circuit magnétique.

La nervure 81 part d'un pied de nervure 81 A du côté A et aboutit à un autre pied de nervure 81 B. La nervure 81 a donc la forme d'une hélice se développant entre le pied 81 A et le pied 81 B. En consultant attentivement les bords haut et bas de la figure 1, on voit que la nervure 81 forme une protubérance sur deux. Quant à la nervure 82, elle forme également une hélice qui part d'un pied de nervure 82A du côté A et aboutit à une tête de hélice au côté B. L'allure de la nervure 82 est donc différente de l'allure de la nervure 81.

Les deux nervures 81 et 82 sont imbriquées l'une dans l'autre. Les deux nervures sont de largeur constante. Un second manchon 9 cylindrique est monté autour du premier manchon 8 (voir figure 2). Ainsi, après fermeture des espaces entre nervures au moyen du manchon extérieur 9, la canalisation 4 de refroidissement est formée d'un premier tronçon 41 qui débute au côté A pour arriver au côté B et est connectée à un second tronçon 42 qui débute au côté B pour parvenir à nouveau au côté A. Le premier tronçon 41 est raccordé du côté B au second tronçon 42 par une zone en coude 40. Du côté A, le premier tronçon débute par une zone 51 en regard d'un orifice d'entrée pour le fluide caloporteur, tandis que le tronçon 42 se termine du même côté A par une zone 52 en regard d'un orifice de sortie pour le fluide caloporteur.

L'ensemble formé par le manchon intérieur 8 et le manchon extérieur 9 forme ainsi un fourreau comportant une canalisation pour faire circuler un fluide caloporteur, cette canalisation débutant et se terminant du même côté axialement de la machine électrique.

La figure 3 montre une machine M selon l'invention. On voit que les raccords hydrauliques 61 et 62 sont adjacents l'un de l'autre. On aperçoit aussi un connecteur électrique 70. Celui-ci est relié aux conducteurs électriques formant le circuit dans lequel circule le courant statorique. Il est éventuellement aussi relié à un capteur de position interne à la machine.

Le connecteur électrique 70 ainsi que les raccords hydrauliques 61 et 62 sont ainsi regroupés d'un même côté de la machine électrique, ici du côté A. On notera que, dans cet exemple de réalisation, l'accouplement mécanique 71 est réalisé du côté opposé de cette machine, donc ici du côté B. Ainsi, on peut monter la machine le côté B faisant face à l'intérieur de la roue du véhicule. Le côté A se trouve alors plus à l'extérieur de la roue du véhicule, du côté intérieur véhicule, ce qui facilite tous les branchements nécessaires.

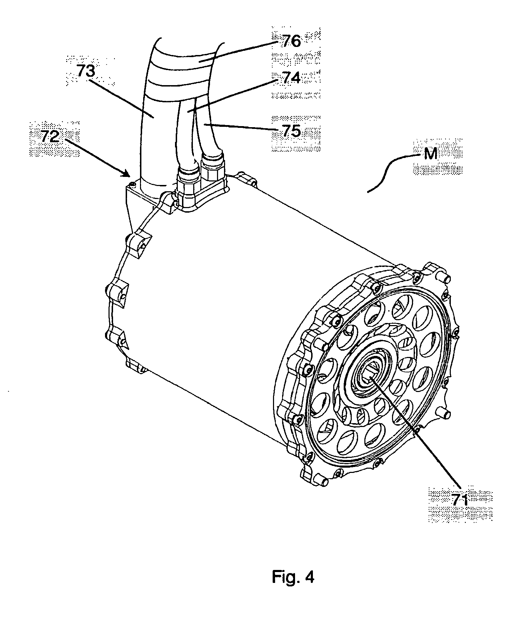

A la figure 4, on voit que le côté A comporte un secteur de connexion 72 regroupant les connexions hydrauliques et électriques du côté intérieur du véhicule. Un faisceau électrique 73 est raccordé au connecteur électrique 70. Deux tuyaux hydrauliques 74 et 75 sont raccordés aux raccords hydrauliques 61 et 62. Le faisceau électrique 73 et les tuyaux hydrauliques 74 et 75 sont ainsi raccordés au secteur de connexion 72 et rassemblés dans une gaine 76 de protection. De la sorte, lorsque la machine électrique M est utilisée par exemple en moteur électrique de traction intégré dans une roue d'automobile, tous les raccordements nécessaires sont regroupés et aboutissent au même secteur sur le moteur, offrant ainsi un arrangement compact et robuste de toutes les liaisons de fluides nécessaires au fonctionnement du moteur. Cette disposition est tout particulièrement favorable à une intégration dans une roue de véhicule, notamment une roue directrice, car elle permet aux raccordements des fluides de suivre tous les mouvements du moteurs.

## Revendications

1. Machine électrique tournante montée dans une roue de véhicule, ladite machine électrique comprenant un rotor intérieur (1) rotatif autour d'un axe de rotation, comportant un stator (2) entourant le rotor, le stator comprenant un circuit magnétique feuilleté (20) présentant une surface enveloppe extérieure (21), la surface enveloppe extérieure étant en contact intime avec un fourreau extérieur (3), le fourreau extérieur contenant une canalisation (4) destinée à la circulation d'un liquide de refroidissement, la canalisation formant un parcours autour de la surface enveloppe extérieure du circuit magnétique, la canalisation formant deux tronçons géométriquement parallèles, fonctionnellement en série, comportant un connecteur électrique (70) ainsi que les raccords hydrauliques (61 et 62) auxquels débouche ladite canalisation (4), **caractérisée en ce que** le connecteur électrique (70) et les raccords hydrauliques (61 et 62) sont regroupés d'un même côté de la machine électrique, dans un secteur de connexion (72), un faisceau électrique (73) est raccordé au connecteur électrique (70), deux tuyaux hydrauliques (74) et (75) sont raccordés aux raccords hydrauliques (61) et (62), le faisceau électrique (73) et les tuyaux hydrauliques (74) et (75) sont raccordés au secteur de connexion (72) et rassemblés dans une gaine (76) de protection.

2. Machine électrique selon la revendication 1, **caractérisée en ce que** l'un des tronçons, formant un premier tronçon (41) de la canalisation, va, axialement, d'un premier côté (A) au second côté (B) de la machine, l'autre des tronçons formant un second tronçon (42) de la canalisation allant, axialement, du second côté (B) au premier côté (A) de la machine, le premier tronçon de la canalisation débouchant dans le second tronçon de la canalisation au second côté (B) de la machine.

3. Machine électrique selon la revendication 2, **caractérisée en ce que** le premier tronçon (41) de la canalisation comporte un départ (51) débouchant à un orifice d'entrée pour un liquide de refroidissement au premier côté de la machine, **en ce que** le second tronçon (42) de la canalisation comporte une arrivée (52) débouchant à un orifice de sortie pour un liquide de refroidissement au premier côté (A) de la machine.

4. Machine électrique selon la revendication 2 ou 3, **caractérisée en ce que** les premier et second tronçons de la canalisation sont en tout point de leur parcours à égale distance de la surface enveloppe extérieure du circuit magnétique,

5. Machine électrique selon l'une des revendications 2 à 4, **caractérisée en ce que** l'orifice d'entrée et l'orifice de sortie débouchent chacun à un raccord hydraulique (61, 62), lesdits raccords étant adjacents l'un de l'autre.

6. Machine électrique selon l'une des revendications 1 à 5, **caractérisée en ce que** le fourreau extérieur forme une surface extérieure (S) globalement cylindrique, lesdits tronçons formant des hélices imbriquées.

7. Machine électrique selon l'une des revendications 1 à 6, **caractérisée en ce que** le fourreau (3) comporte un premier manchon (8) ayant une base cylindrique (80), surmontée de deux nervures (81, 82) de hauteur constante, et un second manchon (9) cylindrique entourant le premier manchon et les nervures.

8. Machine électrique selon des revendications 1 à 7, dont le circuit magnétique feuilleté (20) comporte un empilage de tôles magnétiques (21) disposées sensiblement parallèlement à un plan perpendiculaire à l'axe de rotation du rotor de la machine, le circuit magnétique comportant une pluralité de dents (22), les dents délimitant des encoches (23) orientées longitudinalement, des fils conducteurs électriques étant disposés dans les encoches, les fils conducteurs étant immobilisés dans les encoches par une composition d'imprégnation d'encoche contenant une résine thermodurcissable et une charge.

9. Machine électrique selon l'une des revendications 1 à 8, comportant des chignons aux deux extrémités axiales du circuit magnétique, les conducteurs dans les chignons étant imprégnés par une composition d'imprégnation de chignon contenant une résine thermodurcissable et une charge.

10. Machine électrique selon l'une des revendications 1 à 9, dans laquelle les deux tronçons géométriquement parallèles sont imbriqués l'un dans l'autre.

11. Machine électrique selon l'une des revendications 1 à 10, comportant des moyens d'accouplement mécanique (71), les moyens d'accouplement mécanique étant agencés du côté opposé au côté des raccords hydrauliques (61, 62) et du connecteur électrique (70).

## Claims

1. Rotary electric machine mounted in a vehicle wheel, said electric machine comprising an internal rotor (1) turning about a rotation axis with a stator (2) surrounding the rotor, the stator comprising a laminated magnetic circuit (20) with an outer enveloping surface (21), the outer enveloping surface being in intimate contact with an external casing (3), said external casing containing ducts (4) intended for the circulation of a coolant liquid, the ducts forming a path around the outer enveloping surface of the magnetic circuit, said ducts forming two geometrically parallel sections functionally in series, comprising also an electric terminal block (70) and hydraulic connections (61 and 62) into which the said ducts (4) open, **characterised in that** the electric terminal block (70) and the hydraulic connections (61 and 62) are grouped together on the same side of the electric machine, in a connection sector (72), an electric loom (73) is connected to the electric connector (70), two hydraulic pipes (74) and (75) are connected to the hydraulic connections (61) and (62), the electric loom (73) and the hydraulic pipes (74) and (75) are connected in the connection sector (72) and gathered together inside a protective sheath (76).

2. Electric machine according to Claim 1, **characterised in that** one of the sections forms a first duct section (41) which extends axially from a first side (A) to a second side (B) of the machine, while the other section forms a second duct section (42) which extends axially from the second side (B) to the first side (A) of the machine, the first duct section leading into the second duct section on the second side (B) of the machine.

3. Electric machine according to Claim 2, **characterised in that** the first duct section (41) has a starting point (51) opening into an inlet orifice for a coolant liquid on the first side of the machine, and the second duct section (42) has an emergence point (52) opening into an outlet orifice for a coolant liquid on the first side (A) of the machine.

4. Electric machine according to Claims 2 or 3, **characterised in that** the first and second duct sections are an equal distance from the outer enveloping surface of the magnetic circuit at all points along their path.

5. Electric machine according to any of Claims 2 to 4, **characterised in that** the inlet and outlet orifices each open into a hydraulic connection (61, 62), the said connections being adjacent to one another.

6. Electric machine according to any of Claims 1 to 5, **characterised in that** the external casing forms an outer surface (S) whose overall shape is cylindrical, and the said sections form nested helices.

7. Electric machine according to any of Claims 1 to 6, **characterised in that** the casing (3) comprises a first sleeve (8) having a cylindrical base (80) surmounted by two fins (81, 82) of constant height, and a second cylindrical sleeve (9) surrounding the first sleeve and the fins.

8. Electric machine according to Claims 1 to 7, whose laminated magnetic circuit (20) comprises a stack of magnetic sheets (21) arranged essentially parallel to a plane perpendicular to the rotation axis of the machine's rotor, the magnetic circuit comprising a plurality of teeth (22) which delimit recesses (23) orientated longitudinally, electric conducting wires being arranged inside the recesses and immobilised therein by a recess impregnation composition containing a thermosetting resin and a filler.

9. Electric machine according to any of Claims 1 to 8, comprising lead-out wire looms at the two axial ends of the magnetic circuit, the conductors in the said looms being impregnated by a loom impregnation composition containing a thermosetting resin and a filler.

10. Electric machine according to any of Claims 1 to 9, in which the two geometrically parallel sections are nested one inside the other.

11. Electric machine according to any of Claims 1 to 10, comprising mechanical coupling means (71), said mechanical coupling means being arranged on the side opposite the side on which the hydraulic connections (61, 62) and the electric terminal block (70) are located.

## Patentansprüche

1. Elektromotor, der in einem Fahrzeugrad montiert ist, wobei der Elektromotor einen um eine Drehachse drehbaren inneren Rotor (1) mit einem den Rotor umgebenden Stator (2), wobei der Stator einen laminierten Magnetkreis (20) enthält, der eine äußere Hülloberfläche (21) aufweist, wobei die äußere Hülloberfläche in engem Kontakt mit einer Außenhülse (3) ist, wobei die Außenhülse eine Rinne (4) enthält, die für die Zirkulation einer Kühlungsflüssigkeit bestimmt ist, wobei die Rinne einen Weg um die äußere Hülloberfläche des Magnetkreises bildet und wobei die Rinne zwei geometrisch parallele Segmente bildet, die funktional in Reihe verbunden sind, und einen elektrischen Verbinder (70) sowie Hydraulikanschlüsse (61) und (62), in die die Kanäle (4) münden, enthält, **dadurch gekennzeichnet, dass** der elektrische Verbinder (70) und die Hydraulikanschlüsse (61) und (62) auf derselben Seite des Elektromotors in einem Verbindungssektor (72) gruppiert sind, ein Kabelstrang (73) mit dem elektrischen Verbinder (70) verbunden ist, zwei Hydraulikschläuche (74) und (75) mit den Hydraulikanschlüssen (61) und (62) verbunden sind und der Kabelstrang (73) sowie die Hydraulikschläuche (74) und (75) mit dem Verbindungsabschnitt (72) verbunden sind und in einer Schutzhülle (76) zusammengebunden sind.

2. Elektromotor nach Anspruch 1, **dadurch gekennzeichnet, dass** eines der Segmente, das ein erstes Rinnensegment (41) bildet, axial von einer ersten Seite (A) zu einer zweiten Seite (B) des Motors verläuft, während das Andere der Segmente, das ein zweites Rinnensegment (42) bildet, axial von der zweiten Seite (B) zu der ersten Seite (A) des Motors verläuft, wobei das erste Rinnensegment auf der zweiten Seite (B) des Motors in das zweite Rinnensegment mündet.

3. Elektromotor nach Anspruch 2, **dadurch gekennzeichnet, dass** das erste Rinnensegment (41) einen Anfang (51) aufweist, der in eine Einlassmündung für Kühlungsflüssigkeit auf der ersten Seite des Motors mündet, und dass das zweite Rinnensegment (42) ein Ende (52) aufweist, das in eine Auslassöffnung für Kühlungsflüssigkeit auf der ersten Seite (A) des Motors mündet.

4. Elektromotor nach Anspruch 2 oder 3, **dadurch gekennzeichnet, dass** das erste und das zweite Rinnensegment an jedem Punkt ihres Wegs in gleichem Abstand von der äußeren Hülloberfläche des Magnetkreises sind.

5. Elektromotor nach einem der Ansprüche 2 bis 4, **dadurch gekennzeichnet, dass** die Einlassöffnung und die Auslassöffnung jeweils in einen Hydraulikanschluss (61, 62) münden, wobei die Anschlüsse zueinander benachbart sind.

6. Elektromotor nach einem der Ansprüche 1 bis 5, **dadurch gekennzeichnet, dass** die Außenhülse eine im Allgemeinen zylindrische äußere Oberfläche (S) bildet, wobei die Segmente ineinander verschachtelte Schraubenlinien bilden.

7. Elektromotor nach einem der Ansprüche 1 bis 6, **dadurch gekennzeichnet, dass** die Hülse (3) eine erste Muffe (8), die eine zylindrische Basis (80) besitzt, die durch zwei Stege mit konstanter Höhe (81, 82) erhöht ist, und eine zweite zylindrische Muffe (9), die die erste Muffe und die Stege umgibt, aufweist.

8. Elektromotor nach den Ansprüchen 1 bis 7, dessen laminierter Magnetkreis (20) einen Stapel (21) aus magnetischen Blechen aufweist, die im Wesentlichen parallel zu einer Ebene senkrecht zur Drehachse des Rotors des Motors angeordnet sind, wobei der Magnetkreis mehrere Zähne (22) aufweist, wobei die Zähne in Längsrichtung orientierte Kerben (23) begrenzen, wobei in den Kerben elektrisch leitende Drähte angeordnet sind, wobei die Leiterdrähte in den Kerben durch eine Kerbenimprägnierungsverbindung, die ein wärmeaushärtbares Harz und einen Füllstoff enthält, unbeweglich gemacht sind.

9. Elektromotor nach den Ansprüchen 1 bis 8, der an den zwei axialen Enden des Magnetkreises Wicklungsköpfe aufweist, wobei die Leiter in den Wicklungsköpfen durch eine Wicklungskopfimprägnierungsverbindung, die ein wärmeaushärtbares Harz und einen Füllstoff enthält, imprägniert sind.

10. Elektromotor nach einem der Ansprüche 1 bis 9, wobei die zwei geometrisch parallelen Segmente ineinander verschachtelt sind.

11. Elektromotor nach einem der Ansprüche 1 bis 10, der mechanische Kopplungsmittel (71) aufweist, wobei die mechanischen Kopplungsmittel auf der Seite angeordnet sind, die der Seite der Hydraulikanschlüsse (61, 62) und des elektrischen Verbinders (70) gegenüberliegt.
